Europäisches Patentamt

European Patent Office

Office européen des brevets

(19)

(11) Veröffentlichungsnummer: **0 018 547**
**B1**

(12) **EUROPÄISCHE PATENTSCHRIFT**

(45) Veröffentlichungstag der Patentschrift:
01.12.82

(51) Int. Cl.³: **C 08 B 11/20**

(21) Anmeldenummer: **80102057.9**

(22) Anmeldetag: **17.04.80**

(54) **Verfahren zur Viskositätserniedrigung von wasserlöslichen, nichtionischen Celluloseethern durch Ozon und seine Verwendung.**

(30) Priorität: **27.04.79 DE 2917104**

(43) Veröffentlichungstag der Anmeldung:
**12.11.80 Patentblatt 80/23**

(45) Bekanntmachung des Hinweises auf die Patenterteilung:
**01.12.82 Patentblatt 82/48**

(84) Benannte Vertragsstaaten:
**BE DE FR GB IT NL SE**

(56) Entgegenhaltungen:
**DE-A-2 636 597**
**US-A-3 296 248**

**JOURNAL OF POLYMER SCIENCE, Part. A-1, Vol. 4, (1966) ANDREW A. KATAI et al. «Mechanism of ozone attack on alfa-methyl glucoside and cellulosic materials» Seiten 2683-2703**

**ABSTRACTS BULLETIN OF THE INSTITUTE OF PAPER CHEMISTRY, Band 34 (1964), no. 4403 ALFOLDI, J. et al. «Cellulose and cellulose derivatives»**

(73) Patentinhaber: **HOECHST AKTIENGESELLSCHAFT, Postfach 80 03 20, D-6230 Frankfurt/Main 80 (DE)**

(72) Erfinder: **Holst, Arno, Dr., Drusustrasse 3, D-6200 Wiesbaden (DE)**
Erfinder: **Perplies, Eberhard, Dr., Rhönstrasse 11, D-6229 Walluf (DE)**

Verfahren zur Viskositätserniedrigung von wasserlöslichen, nichtionischen Celluloseethern durch Ozon und seine Verwendung

Die Erfindung betrifft ein Verfahren zur Viskositätserniedrigung von wasserlöslichen, nichtionischen Celluloseethern durch ihre Umsetzung mit Ozon und eine Verwendung des erfindungsgemässen Verfahrens.

Für die verschiedenen Anwendungsgebiete werden Celluloseether mit unterschiedlichsten Eigenschaften benötigt. Neben ihrem Löslichkeitsverhalten oder ihrem Substitutionsgrad ist einer der entscheidenden Parameter zur Charakterisierung der Celluloseether ihre Viskosität. Zur Herstellung niedrigviskoser wasserlöslicher Celluloseether werden in der Fachliteratur im wesentlichen drei Verfahrensweisen beschrieben, die aber alle eine Molekülkettenspaltung zum Hauptziel haben, d. h. aus Ausgangsstoffen mit einer relativ höheren Molekularmasse werden Zwischenprodukte oder Endprodukte mit einer niedrigeren Molekularmasse erzeugt. Dieses Ziel wird entweder erreicht durch Abbau des Cellulosemoleküls vor oder während der Veretherung oder durch Abbau des Celluloseethermoleküls. Bei den beiden ersten Verfahrensweisen tritt als wesentlicher Nachteil von nach ihnen erhaltenen Zwischenprodukten auf, dass diese bereits vor den üblicherweise eingesetzten Reinigungsstufen in den Verfahren zur Herstellung dieser Celluloseethr als relativ kleinkettige Moleküle anfallen, wodurch sie entweder in der Reinigungsflüssigkeit (meistens aus Wasser oder wässrigen organischen Lösemitteln) zu stark anquellen oder sich darin ebenso wie die Verunreinigungen in zu grossem Masse lösen.

Zur Durchführung der dritten Verfahrensvariante sind beispielsweise der Abbau mit chemischen Oxidationsmitteln wie Hypochlorit oder $H_2O_2$, oder mit energiereichen Strahlungen bekannt geworden.

In der DE-PS 667 864 wird ein Verfahren zur Viskositätserniedrigung von wässrigen Lösungen von Celluloseethern beschrieben, bei dem man auf wässrige Celluloseetherlösungen Mikroorganismen oder Enzyme einwirken lässt; die Viskosität wird auf bis zu etwa 50% des Ausgangswertes erniedrigt.

Bei dem Verfahren zur Viskositätserniedrigung von Celluloseethern mit Wasserstoffperoxid gemäss der DE-AS 20 16 203 wird ein im wesentlichen trockener, frei fliessender kleinteiliger Celluloseether mit 10 bis 50%iger Wasserstoffperoxidlösung vermischt und diese Mischung auf eine Temperatur von 50 bis 150°C so lange erhitzt, bis der Celluloseether eine niedrigere Viskosität aufweist; die Viskosität wird — abhängig von der Menge an $H_2O_2$, der Reaktionstemperatur und -dauer und der Grösse der Ausgangsviskosität — auf bis zu etwa 1% des Ausgangswertes erniedrigt.

Aus der CH-PS 461 455 ist ein Verfahren zur Herstellung niedrigviskoser wasserlöslicher Celluloseether durch oxidativen Abbau höherviskoser Ether mit $H_2O_2$ bekannt, bei dem man den wasserfeuchten Celluloseether mit einer wässrigen Lösung von $H_2O_2$ mischt, wobei ein bestimmtes Mischungsverhältnis an Ether, $H_2O_2$ und Wassergehalt eingestellt wird, und man das Gemisch dann bei 100 bis 250°C bis zum völligen Verbrauch des $H_2O_2$ trocknet; die Viskosität wird auf bis zu etwa 0,5% des Ausgangswertes erniedrigt.

In der GB-PS 953 944 wird ein Verfahren zur Erniedrigung der Viskosität wasserlöslicher, nichtionischer Celluloseether beschrieben, bei dem in wässriger Suspension oder durch Besprühen die Ether mit einer wässrigen Lösung von $H_2O_2$ bei Temperaturen von etwa 70 bis 100°C umgesetzt werden; die Viskosität wird auf bis zu etwa 0,5% des Ausgangswertes erniedrigt.

Bei dem Verfahren gemäss der US-PS 2 512 338 wird der Reaktionsmischung aus Alkalicellulose und einem Veretherungsmittel zur Viskositätsbeeinflussung ein Gemisch aus $H_2O_2$ oder einem Metallperoxid und einem Metallsalz mit einem Mn-, Co-, Fe- oder Pb-Ion zugegeben; die Viskosität wird auf bis zu etwa 0,3% des Ausgangswertes erniedrigt.

Aus der US-PS 2 895 891 ist die Bestrahlung von Celluloseethern mit ionisierenden Strahlen bekannt, die bei nichtionischen und ionischen Celluloseethern im trockenen Zustand zu einem Viskositätsabbau führt; ein Viskositätsabbau auch in (Wasser-)feuchtem Zustand wird jedoch nur bei ionischen, nicht aber bei nichtionischen Celluloseethern beobachtet, die letzteren werden unter diesen Bedingungen vernetzt.

In der US-PS 2 912 431 wird zur Bleichung, Viskositätserniedrigung und zur Verdichtung einem Gemisch aus einer fasrigen Carboxyalkylcellulose und einem wässrigen Alkohol ein Salz mit einem Alkali-, Erdalkali- oder Ammoniumkation und einem Hypohalogenit-, Peroxid- oder Periodatanion zugesetzt; die Viskosität wird auf bis zu etwa 1% des Ausgangswertes erniedrigt, die Reaktionstemperatur liegt zwischen 40 und 80°C.

Bei dem Verfahren gemäss der US-PS 4 061 859 wird ein trockenes Celluloseether-Pulver zur Viskositätserniedrigung unter gleichzeitiger Verringerung der Molekularmasse a) mit gasförmigem Halogenwasserstoff bei bis zu etwa 80°C und anschliessend b) mit gasförmigem Schwefeldioxid bei Raumtemperatur umgesetzt; durch den zusätzlichen Verfahrensschritt b) wird die Verfärbung (im wesentlichen eine Gelbfärbung) des Celluloseethers, die bei alleiniger Durchführung des Stufe a) eintritt, verhindert; die Viskosität wird auf bis zu etwa 0,05% des Ausgangswertes erniedrigt, die Feuchtigkeit im zu behandelnden Celluloseether-Pulver soll einen Maximalwert von etwa 5% nicht überschreiten.

Nachteilig bei den bekannten Verfahren mit dem Oxidationsmittel $H_2O_2$ oder Hypochlorit ist einerseits die Notwendigkeit der Reaktionsführung bei einer im Bereich von 40 bis 150°C liegenden Temperatur und andererseits die Nichtstabilität der Viskosität der nach diesen Verfahren erhaltenen Produkte, da sich die Viskosität
beim Lagern der Produkte häufig weiter verringert. Da der Viskositätsabbau der Celluloseether
möglichst mit den bereits ausgewaschenen, noch
feuchten Produkten durchgeführt werden soll,
ist sowohl der Abbau mit energiereichen Strahlen, da er dann mit den nichtionischen Celluloseethertypen ohne störende Nebenreaktionen (Vernetzung) nicht durchgeführt werden kann, als
auch der Abbau mit HCl- und/oder $SO_2$-Gas
nachteilig, da die Feuchtigkeit dort bereits in
sehr grossem Mass beseitigt worden sein muss;
ausserdem treten bei Einsatz der letztgenannten
Gase grössere Korrosionsprobleme auf.

Es sind auch schon Reaktionen von Cellulose
oder Celluloseetherderivaten mit Ozon bekannt
geworden.

Aus der US-PS 3 138 564 ist ein Verfahren bekannt, bei dem polymerisierbare, vinylidengruppenhaltige Monomere auf ein solches Polysaccharid aufgepfropft werden, das vorher in wässriger Dispersion oder Lösung mit Ozon oder
einem Ozon enthaltenden Gas behandelt wurde.
Das überschüssige Ozon wird mit Hilfe eines
inerten Gases aus dem Reaktionsgemisch ausgeblasen, als Polysaccharid-Ausgangsmaterial
wird u. a. auch Carboxymethylcellulose genannt.
Diese Reaktion zwischen einem Polysaccharid
und Ozon dient zur Erzeugung von radikalischen
Zwischenstufen für die anschliessend durchzuführende Pfropfung, eine gezielte Abbaureaktion
ist offensichtlich nicht beabsichtigt.

Nach dem Aufsatz «Untersuchung über die
Pfropfung von Carboxymethylcellulose mit Acrylnitril» von C. Simionescu, D. Feldman und C.
Vasiliu in Faserforschung und Textiltechnik 13,
1962, Heft 2, Seiten 70 bis 79 kann die Pfropfung
in Gegenwart von $Ce^{4+}$-Ionen durch Ultraschall,
UV-Strahlung, ein Magnetfeld oder durch Ozonisierung eingeleitet werden; es wird dabei auch
auf einen gewissen Viskositätsabfall hingewiesen, der zu einer Verringerung der Molekularmasse bis auf die Hälfte führen kann. Neben
dem Ausgangsmaterial Carboxymethylcellulose
wird auch Methylcellulose eingesetzt, die Behandlung der in Filmform vorliegenden Celluloseether wird in wässrig, schwach saurer Lösung
unter gleichzeitiger Anwesenheit von $Ce^{4+}$-Ionen
vorgenommen.

In dem Aufsatz «Mechanism of Ozone Attack
on $\alpha$-Methyl Glucoside and Cellulosic Materials»
von A. A. Katai und C. Schuerch in Journal of
Polymer Science, Vol. 4, 1966, Seiten 2683 bis
2703 wird u. a. die Wechselwirkung von Ozon
mit Methylcellulose eines Substitutionsgrades
von 1,5 beschrieben. Mit zunehmender Menge an
umgesetztem Ozon nimmt die Molekularmasse
der Methylcellulose ab und die Anzahl der Carbonyl- bzw. Carboxylgruppen an den Molekülen
zu, wobei diese Veränderungen sowohl bei einer
Ozonisierung in einer Sauerstoff- als auch in
einer Stickstoffatmosphäre stattfinden. Das Ozonisierungsverfahren wird in einer 1,6 gew.%oigen
wässrigen Methylcelluloselösung durchgeführt.

Nachteilig bei diesen Verfahren der Umsetzung von wasserlöslichen Celluloseethern mit
Ozon ist die Durchführung der Reaktion in wässriger Lösung, da dadurch in den grosstechnischen Anlagen zur Herstellung von Celluloseethern eine zusätzliche Auflösungsstufe eingesetzt werden müsste, was beispielsweise einerseits zu grossvolumigen Gefässen (hochkonzentrierte Celluloseetherlösungen sind kaum herstellbar) zur Auflösung und andererseits zu einer
energieverbrauchenden Wiederentfernung des
Auflösemittels führen würde.

Aufgabe der vorliegenden Erfindung ist es deshalb, ein Verfahren zur Viskositätserniedrigung
von wasserlöslichen Celluloseethern vorzuschlagen, das bei Raumtemperatur oder einer nicht
wesentlich darüberliegenden Temperatur und
ohne grösseren zusätzlichen apparativen Aufwand durchgeführt werden kann und zu Produkten führt, deren Viskosität lagerstabil ist.

Die Erfindung geht aus von einem Verfahren
zur Viskositätserniedrigung von Celluloseethern
durch Umsetzung von wasserlöslichen Celluloseethern mit Ozon in Anwesenheit von Wasser.
Das erfindungsgemässe Verfahren ist dadurch
gekennzeichnet, dass ein wasserfeuchter Celluloseether aus der Gruppe Hydroxyalkylcellulose
mit einer Hydroxyalkylgruppe von 2 bis 4 C-Atomen, Alkylcellulose mit einer Alkylgruppe von 1
oder 2 C-Atomen oder einem ihrer Mischether
eines Trockengehalts von 20 bis 95 Gew.-% mit
einem Ozon/Sauerstoff- oder Ozon/Luft-Gemisch
bei einer Temperatur von etwa 0° bis 60°C umgesetzt wird.

Als wasserlösliche Celluloseether werden als
Hydroxyalkylcellulosen beispielsweise Hydroxyethyl- oder Hydroxypropylcellulose, als Alkylcellulosen beispelsweise Methylcellulose oder als
ihre Mischether beispielsweise Methyl-hydroxy-
ethyl-,　Methyl-hydroxypropyl-,　Ethyl-hydroxy-
ethyl-, Hydroxyethyl-hydroxypropyl- oder Methyl-
-hydroxyethyl-hydroxypropylcellulose eingesetzt.

In bevorzugten Ausführungsformen des erfindungsgemässen Verfahrens beträgt der Trockengehalt des wasserfeuchten Celluloseethers 40
bis 75 Gew.-% und das Ozon wird bei einer Temperatur von etwa 15 bis 40°C umgesetzt.

Die grosstechnische Herstellung und Anwendungsmethodik des Ozons ist bekannt, es wird
beispielsweise auf Ullmanns Encyklopädie der
technischen Chemie, Verlag Urban & Schwarzenberg - München / Berlin, 3. Auflage, 1964,
Band 15, Seiten 98 bis 103 verwiesen. Im erfindungsgemässen Verfahren wird das Ozon entweder in Form eines Ozon/Sauerstoff- oder Ozon/
Luft-Gemisches gleichmässig dem wasserfeuchten Celluloseether zugemischt und im Mischgefäss umgesetzt, zweckmässig wird dies kontinuierlich oder diskontinuierlich in einem der
handelsüblichen Mischer wie Knetmischern,
Schneckenmischern, Förderband- oder Drehtrommelmischern ausgeführt. Die Reaktionszeiten richten sich im wesentlichen nach der Menge des angebotenen Ozons pro Gew.-Teil Celluloseether, der Reaktionstemperatur, der Art des Celluloseethers, der Menge an Feuchte und dem beabsichtigten Grad des Abbaus; sie bewegen sich normalerweise im Bereich von etwa 5 min bis 120 min. Nach Ablauf der geplanten Reaktion wird das Reaktionsgemisch nach einem der üblichen Verfahren getrocknet.

Das erfindungsgemässe Verfahren lässt sich insbesondere in einem der bekannten Verfahren zur Herstellung eines wasserlöslichen, nichtionischen Celluloseethers anwenden, die im wesentlichen die Stufen a) Cellulosealkalisierung, b) Veretherung, c) Auswaschung und d) Trocknung aufweisen; zweckmässig wird die Ozonisierung dann zwischen den Stufen c) und d) ausgeführt, d. h. der als rohes Zwischenprodukt anfallende, relativ höherviskose (eine relativ grössere Molekularmasse aufweisende) Celluloseether wird von Verunreinigungen in einer der üblichen Auswaschstufen befreit, die anhaftende Feuchte wird bis zu einem Trockengehalt des wasserfeuchten Produktes von maximal 95 Gew.-%, insbesondere von maximal 75 Gew.-%, beispielsweise durch Zentrifugieren entfernt, das wasserfeuchte Produkt wird ozonisiert, und das dann relativ niedrigviskose (eine relativ kleinere Molekularmasse aufweisende) Produkt wird abschliessend getrocknet und gegebenenfalls konfektioniert.

Auch nach einer Lagerzeit von 60 Tagen befindet sich die Viskosität eines nach dem erfindungsgemässen Verfahren hergestellten Celluloseethers noch in dem Bereich, der zu Beginn der Lagerzeit festgestellt wird. d. h. mit Ozon abgebaute Celluloseether weisen eine lagerstabile Viskosität auf. Die Viskosität kann bis auf etwa 0,02% und weniger des Ausgangswertes verringert werden. Die Vorteile des erfindungsgemässen Ozonabbaus liegen weiterhin u. a. in der guten Dosierbarkeit des Oxidationsmittels, der problemlosen Vernichtung von nichtumgesetzten Ozonresten bereits bei relativ niedrigen Temperaturen (ab etwa 60°C), dem geringen apparativen Aufwand zur Durchführung des Verfahrens und dem Reaktionsvermögen des Ozons gegenüber den Celluloseethermolekülen bereits bei Raumtemperatur.

Die in den nachfolgenden Beispielen angegebenen Viskositätswerte wurden in 2 gew.%iger wässriger Lösung des jeweiligen Celluloseethers bei 20°C in einem Viskosimeter nach Höppler bestimmt, die %-Angaben beziehen sich auf das Gewicht; die Ozon/Sauerstoff- bzw. Ozon/Luft-Gemische wurden einem handelsüblichen Ozonisator entnommen. Die Substitutionsgrade werden — abhängig von der Art des Substituenten — als DS oder MS bezeichnet.

Beispiel 1

Es werden 100 g einer wasserfeuchten Methylhydroxyethylcellulose (MHEC, $DS_M$ = 1,62, $MS_{HE}$ = 0,19) mit einem Trockengehalt von 58,5% in einem Mischer mit einem Ozon/Sauerstoff-Gemisch (Ozonanteil etwa 1,6%) in einer Menge von 60 l/h begast. Das abgebaute Produkt wird bei einer Temperatur von 105°C getrocknet.

Beispiel 2

Es werden 100 g einer wasserfeuchten Methylhydroxyethylcellulose (MHEC, $DS_M$ = 1,57, $MS_{HE}$ = 0,20) mit einem Trockengehalt von 59,8% in einem Mischer mit einem Ozon/Luft-Gemisch (Ozonanteil etwa 0,8%) in einer Menge von 84 l/h begast. Das abgebaute Produkt wird bei einer Temperatur von 80°C getrocknet.

Beispiel 3

Es wird nach den Angaben des Beispiels 2 mit 100 g einer wasserfeuchten Hydroxyethylcellulose (HEC, $MS_{HE}$ = 2,50, $DS_{HE}$ = 1,16) mit einem Trockengehalt von 48,0% verfahren.

Die erhaltenen Messergebnisse und Versuchsbedingungen sind in der nachfolgenden Tabelle zusammengestellt.

### TABELLE

| Beispiel | Cellulose-ether-Typ | Reaktionszeit (min) | Reaktionstemperatur (°C) | Viskosität (mPas) |
|---|---|---|---|---|
| 1 | MHEC | 0 | — | 30.000 |
|  |  | 5 | 30 | 28 |
|  |  | 10 | 30 | 11 |
|  |  | 30 | 30 | 5 |
| 2 | MHEC | 0 | — | 30.000 |
|  |  | 5 | 25 | 115 |
|  |  | 10 | 25 | 35 |
|  |  | 30 | 25 | 10 |
| 3 | HEC | 0 | — | 4.000 |
|  |  | 10 | 30 | 450 |
|  |  | 30 | 30 | 75 |
|  |  | 120 | 30 | 10 |

### Patentansprüche

1. Verfahren zur Viskositätserniedrigung von Celluloseethern durch Umsetzung von wasserlöslichen Celluloseethern mit Ozon in Anwesenheit von Wasser, dadurch gekennzeichnet, dass ein wasserfeuchter Celluloseether aus der Gruppe Hydroxyalkylcellulose mit einer Hydroxyalkylgruppe von 2 bis 4 C-Atomen, Alkylcellulose mit einer Alkylgruppe von 1 oder 2 C-Atomen oder einem ihrer Mischether eines Trockengehalts von 20 bis 95 Gew.-% mit einem Ozon/Sauerstoff- oder Ozon/Luft-Gemisch bei einer Temperatur von 0° bis 60°C umgesetzt wird.

2. Verfahren nach Anspruch 1, dadurch gekennzeichnet, dass der Trockengehalt des wasserfeuchten Celluloseethers 40 bis 75 Gew.-% beträgt.

3. Verfahren nach Anspruch 1 oder 2, dadurch gekennzeichnet, dass bei einer Temperatur von 15 bis 40°C umgesetzt wird.

4. Verwendung des Verfahrens nach einem der Ansprüche 1 bis 3 in einem Verfahren zur Herstellung eines wasserlöslichen, nichtionischen Celluloseethers im wesentlichen mit den Stufen a) Cellulosealkalisierung, b) Veretherung, c) Auswaschung und d) Trocknung als zusätzliche Stufe zwischen den Stufen c) und d).

## Claims

1. Process for reducing the viscosity of cellulose ethers by reacting a water-soluble cellulose ether with ozone in the presence of water, characterized in that the cellulose ether, which is a hydroxyalkyl cellulose having a hydroxyalkyl group containing from 2 to 4 carbon atoms, an alkyl cellulose having an alkyl group containing 1 or 2 carbon atoms, or is one of the mixed ethers thereof, and which is moist with water and has a dry content of from 20 to 95% by weight is reacted with an ozone/oxygen mixture or with an ozone/air mixture at a temperature of 0 to 60°C.

2. Process according to claim 1, characterized in that the dry content of the cellulose ether which is moist with water ranges from 40 to 75% by weight.

3. Process according to claims 1 or 2, characterized in that the reaction is carried out at a temperatur between 15 and 40°C.

4. Use of the process according to one of the claims 1 to 3 in a process for manufacturing a water-soluble, non-ionic cellulose ether comprising the steps of a) alkalizing cellulose, b) etherifying, c) washing out and d) drying as an additional step between steps c) and d).

## Revendications

1. Procédé pour la réduction de la viscosité d'éthers de cellulose dans lequel on fait réagir des éthers de cellulose hydrosolubles avec de l'ozone en présence d'eau, caractérisé en ce que l'on fait réagir, avec un mélange d'ozone et d'oxygène ou un mélange d'ozone et d'air et à une température comprise entre 0 et 60°C, un éther de cellulose humide par l'eau, choisi dans le groupe comprenant les hydroxyalkylcelluloses renfermant un groupe hydroxyalkyle ayant de 2 à 4 atomes de carbone, les alkylcelluloses renfermant un groupe alkyle ayant 1 ou 2 atomes de carbone, ou un de leurs éthers mixtes, dont la teneur en matière sèche est comprise entre 20 et 95% poids.

3. Procédé selon la revendication 1 ou 2, carisé en ce que la teneur en matière sèche de l'éther de cellulose humide par l'eau est comprise entre 40 et 75% en poids.

3. Procédé selon la revendication 1 ou 2 caractérisé en ce que la réaction est conduite à une température comprise entre 15 et 40°C.

4. Application du procédé selon l'une des revendications 1 à 3 dans un procédé pour la fabrication d'éthers de cellulose hydrosolubles non ioniques comprenant essentiellement les stades suivants: a) l'alcalisation de la cellulose, b) l'éthérification, c) le lavage et d) comme stade intermédiaire entre les stades c) et d), un séchage.